# EUROPÄISCHE PATENTSCHRIFT

(11) **EP 1 346 162 B1**
(45) Veröffentlichungstag und Bekanntmachung des Hinweises auf die Patenterteilung: **29.03.2006**
(21) Anmeldenummer: 01991810.1
(22) Anmeldetag: 07.12.2001
(51) Int. Cl.: F16C 33/78

(54) **ABDICHTUNG FÜR EIN WÄLZLAGER**
SEAL FOR A ROLLER BEARING
JOINT POUR PALIER A ROULEMENT

(30) Priorität: 13.12.2000 DE 10061995
(43) Veröffentlichungstag der Anmeldung: 24.09.2003
(73) Patentinhaber: INA-Schaeffler KG, 91074 Herzogenaurach (DE)
(72) Erfinder: SCHMIDT, Werner, 91074 Herzogenaurach (DE)
(86) Internationale Anmeldenummer: PCT/EP2001/014425
(87) Internationale Veröffentlichungsnummer: WO 2002/048562

(56) Entgegenhaltungen:
- DE-C- 3 514 203
- FR-A- 2 479 374
- FR-A- 2 747 747
- US-A- 4 025 132
- US-A- 4 408 808
- US-A- 4 863 293

## Beschreibung

### Gebiet der Erfindung

Die vorliegende Erfindung bezieht sich auf eine Abdichtung für ein Wälzlager, insbesondere auf ein Rillenkugellager, mit einer zwischen dem inneren und dem äußeren Lagerring eingesetzten Dichtung, welche an dem ersten Lagerring befestigt und über eine Dichtlippe an dem zweiten Lagerring abgestützt ist. Das Wälzlager ist versehen mit zwei jeweils zu den Wälzkörpern axial beabstandet angeordneten Dichtungen.

### Hintergrund der Erfindung

Eine gattungsbildende Abdichtung ist aus der DE 41 33 777 A1 bekannt. Das zur Lagerung einer Spannrolle, eingesetzt in einem Zahnriementrieb, vorgesehene Wälzlager zeigt beidseitig der Wälzkörper angeordnete Dichtungen. Die jeweils am äußeren Lagerring befestigten Dichtungen verschließen einen durch die Lagerringe radial begrenzten Ringspalt und sind übereinstimmend mit einer Dichtlippe an der Mantelfläche des inneren Lagerrings abgestützt. Die Abdichtung aus dem bekannten Stand der Technik ist ausreichend für einen beispielsweise spritzwassergeschützten Einbau der Spannrolle, um einen nachteiligen Eintritt von Verunreinigungen in das Wälzlager bzw. einen Schmiermittelaustritt aus dem Wälzlager zu verhindern.

Für Fahrzeuge, die im Off-Road-Betrieb eingesetzt werden, verbunden mit Wasserdurchfahrten bzw. massiven Schmutzeintritt in den für die Brennkraftmaschine vorgesehenen Einbauraum, ist die bekannte Abdichtung ungeeignet. Als Maßnahme, die Wirksamkeit der bekannten Abdichtung zu verbessern, sind Deckel bekannt, die an der Spannrollennabe befestigt, das gesamte Wälzlager stimseitig abdecken. Diese üblicherweise angeschnappten Deckel bieten für einen Extremeinsatz ebenfalls keinen wirksamen Schutz, da über die Verschnappung Feuchtigkeit in den vom Deckel begrenzten Zwischenraum und anschließend über die Dichtlippe in das Wälzlager eintreten kann. Außerdem ist der zusätzliche, stimseitige Deckel nur auf einer Seite des Wälzlagers einsetzbar.

### Zusammenfassung der Erfindung

Durch die Erfindung wird die Aufgabe gelöst, eine verbesserte Wälzlagerabdichtung zu realisieren, die auch extremen Einsatzbedingungen standhält.

Bei einer Abdichtung der zuvor erwähnten Bauart wird erfindungsgemäß der Dichtung axial ein separates Bauteil vorangestellt, das drehstarr mit dem zweiten Lagerring verbunden ist. Die erfindungsgemäße zweistufige Abdichtung verbessert entscheidend die Abdichtqualität und gewährleistet eine wartfähige Lagerung. Zur Bildung einer zweistufigen Abdichtung ist der Dichtung axial ein weiteres Bauteil vorgelagert, mit dem die Dichtung einen radial ausgerichteten Dichtspalt bildet. Diese Abdichtung ist gemäß der Erfindung auf beiden Seiten der Wälzkörper vorgesehen. Die Wirksamkeit der Abdichtung verbessemd ist zumindest teilweise in den Dichtspalt ein Dichtmittel eingebracht. Das Dichtmittel bildet dabei einen geschlossenen Kreis innerhalb des Dichtspaltes und verbessert die weitere Abdichtung.

In Ausgestaltung der Erfindung ist das weitere axial vorgelagerte Bauteil am Außenumfang mit einer Dichtlippe versehen, die an dem äußeren Lagerring stirnseitig anliegt. Die Dichtlippen der Dichtung und der Dichtscheibe jeder Abdichtung sind an unterschiedlichen Lagerringen abgestützt sind, was die Wirksamkeit der zweistufigen Abdichtung zusätzlich verbessert.

Der erfindungsgemäße kreisringförmige Dichtspalt, der zur Aufnahme des Dichtmittels vorgesehen ist, ist radial nach außen gerichtet offen. Gegensätzlich dazu ist die unmittelbar im Wälzlager eingebrachte Dichtung über die Dichtlippe an den inneren Lagerring abgestützt. Das die zweite Abdichtung bildende Dichtmittel bildet folglich eine wirksame Vordichtung für die schleifend an dem inneren Lagerring anliegende Dichtlippe der Dichtung. Die erfindungsgemäße Abdichtung verhindert den Eintritt sowohl von Verunreinigungen als auch von Flüssigkeiten jeglicher Art in das Wälzlager. Folglich erfüllt diese Abdichtung spezielle Spezifikationen, die für Off-Road-Fahrzeuge oder Militärfahrzeuge erhoben werden bzw. für andere extreme Einsatzbedingungen. Die Abdichtung gewährleistet ebenfalls Forderungen hinsichtlich der Wartfähigkeit, bei dem kurzzeitig Bauteile des Fahrzeugs und damit der Brennkraftmaschine eintauchen und damit vollständig unter Wasser stehen. Vorteilhaft ist die erfindungsgemäße Maßnahme innerhalb des vorhandenen Bauraums realisierbar, wodurch die Verwendung üblicher Serien-Wälzlager möglich ist. Außerdem ist keine Anpassung der Anbauteile an die erfindungsgemäße zweistufige Abdichtung erforderlich. Auch ist die Montage der zweistufigen Abdichtung ohne höhere Mehrkosten realisierbar.

Weitere vorteilhafte Ausgestaltungen sind Gegenstand der abhängigen Ansprüche 2 bis 14.

Die Erfindung ist insbesondere für Wälzlager vorgesehen, die in Bauteilen des Zugmitteltriebs einer Brennkraftmaschine eingesetzt werden. Die in axialer Richtung zweistufige Abdichtung des Wälzlagers verhindert wirkungsvoll einen Schmutz und/oder Feuchtigkeitseintritt in das Wälzlager einer Spannrolle, Umlenkrolle oder Spannvorrichtung auch bei einem extremen Off-Road-Einsatz des Fahrzeugs.

Ein vorteilhafter Aufbau der erfindungsgemäßen zweistufigen Abdichtung umfaßt eine separate Dichtscheibe, die unter Einhaltung des Dichtspaltes axial der Dichtung vorangestellt ist. Dabei ist die Dichtscheibe drehstarr mit dem inneren Lagerring verbunden. Dazu ist eine dünnwandige Dichtscheibe einsetzbar, die mit üblichen bisherigen Bauteilen, insbesondere dem Wälzlager kombiniert werden kann. Die erfindungsgemäße Dichtscheibe ist damit vorzugsweise nachrüstbar bzw. ohne nachteiligen Einfluß mit vorhandenen Baueinheiten kombinierbar.

Gemäß einer weiteren vorteilhaften Ausgestaltung der Erfindung ist das Wälzlager auf einem zylindrischen Abschnitt eines Trägerrings angeordnet, der endseitig einen radial umlaufenden Bord aufweist. Im eingebauten Zustand ist der Bord axial beabstandet zu der Dichtung angeordnet und erstreckt sich radial bis über den Ringspalt zwischen den Lagerringen. Dabei definiert der axiale Abstand zwischen der Dichtung und dem Bord des Trägerrings den Dichtspalt, in den ein Dichtmittel eingebracht werden kann.

Die erfindungsgemäße zweistufige Abdichtung ist weiterhin realisierbar mit einem Gehäusezapfen, auf dem der Innenring des Wälzlagers zentriert ist und an den sich eine radial ausgerichtete Schulter anschließt. Durch die axial beabstandet zur Dichtung des Wälzlagers verlaufende Schulter im Einbauzustand ergibt sich ein Dichtspalt, der zur. Aufnahme eines Dichtmittels genutzt werden kann.

Gemäß der Erfindung kann die zweistufige Abdichtung auf beiden Seiten des Wälzlagers gleich oder auch unterschiedlich konzipiert sein. Es hat sich als besonders günstig herausgestellt, das Wälzlager auf dem Spannarm oder der Seite, die der Brennkraftmaschine abgewandt ist, mit einer separaten Dichtscheibe zu versehen, die axial beabstandet zu der Dichtung angeordnet ist. Auf der Gegenseite bildet die Dichtung mit dem Bord des Trägerrings oder der Schulter des Gehäusezapfens den Dichtspalt. Denkbar ist ebenfalls, dem Wälzlager beidseitig eine Dichtscheibe zuzuordnen. Infrage kommen ebenfalls Wälzlager-Anordnungen, bei denen beispielsweise ein Trägerring mit einem Gehäusezapfen kombiniert ist.

Für eine bevorzugte Ausgestaltung der separaten Dichtscheibe bietet es sich an, diese aus einem metallischen Werkstoff in Form eines Scheibenkörpers spanlos herzustellen. Der Scheibenkörper ist dabei mit einer zentrischen Befestigungsbohrung versehen, deren Durchmesser übereinstimmt mit dem Durchmesser des Lagerinnenrings. Eine weitere Ausgestaltung des Scheibenkörpers sieht vor, dass sich dieser über den sich zwischen den Lagerringen bildenden Ringspalt radial erstreckt. Der bevorzugte Aufbau der Dichtscheibe sieht weiterhin vor, daß diese außenseitig von einer elastischen Dichtlippe umschlossen ist. Im eingebauten Zustand stützt sich die Dichtlippe an der Stirnseite des äußeren Lagerrings ab. Als eine günstige Befestigung hat sich herausgestellt, die Dichtlippe am Außenumfang des Scheibenkörpers zu vulkanisieren. In Frage kommen weiterhin anderen Befestigungen, beispielsweise eine Klebung oder formschlüssige Anbindung, bei der die Dichtlippe mittels einer umlaufenden Nut die Außenkontur des Scheibenkörpers umgreift.

Zur Darstellung des Dichtspaltes ist der Scheibenkörper der Dichtscheibe mit einer Kröpfung versehen. Diese vom Wälzkörper abgewandte Kröpfung ist dabei im Bereich des sich zwischen den Lagerringen einstellenden Ringspaltes angeordnet und erstreckt sich bis zum Außenumfang.

Als ein besonders günstiges Dichtmittel, das zumindest teilweise in den Dichspalt eingebracht ist, hat sich ein umlaufender Fettkragen herausgestellt. Diese Zusatzbefettung bildet eine dauerhafte wirksame Abdichtung insbesondere gegen einen Feuchtigkeitseintritt in das Wälzlager. Dabei ist die Befettung kostengünstig und leicht in den Dichtspalt einzubringen.

Als Alternative zu einem umlaufenden Fettkragen schließt die Erfindung weiterhin beispielsweise einen Filzring ein, welcher beispielsweise unmittelbar axial an der Dichtung befestigt ist und schleifend an der Dichtscheibe, dem Bord des Trägerrings oder der Schulter des Gehäusezapfens dichtend anliegt. Außerdem schließt die Erfindung weitere geeignete Dichtmittel ein, die in den Dichtspalt eingebracht werden können.

Der erfindungsgemäße zweistufige Aufbau der Wälzlager-Abdichtung sieht weiterhin vor, daß die Dichtung in einer axial zur Stirnseite des äußeren Lager rings eingebrachten Ringnut lagefixiert gehalten ist. Die Dichtung erstreckt sich dabei bis an den inneren Lagerring und stützt sich an diesem Bauteil über eine Dichtlippe ab. Die Armierung der Dichtung ist bis nahe an die Mantelfläche des inneren Lagerrings geführt.

Erfindungsgemäß sieht der Aufbau der Dichtung vor, daß deren Dichtlippe in eine Umlaufnut eingreift, die axial zu der Stirnseite des inneren Lagerrings angeordnet ist. Die Dichtlippe stützt sich dabei schleifend an einer Wandung der Umlaufnut ab. Zur Erzielung eines selbsttätigen Druckausgleichs des Wälzlager-Innenraums ist gemäß einer weiteren Ausgestaltung der Erfindung vorgesehen, daß die Dichtlippen der Dichtung jeweils an der rechten oder linken Wandung der zugehörigen Umlaufnut anliegen. Diese Anordnung ermöglicht einen Druckausgleich in beiden Richtungen, d.h. bei einem im Wälzlagerinnenraum auftretenden Überdruck hebt die erste Dichtlippe kurzzeitig von der Wandung ab und bei einem Vakuum bzw. einem Differenzdruck zwischen der äußeren Atmosphäre und dem Innenraum des Wälzkörpers die zweite Dichtlippe.

Als Druckausgleich schließt die Erfindung ebenfalls ein, zumindest eine Dichtlippe der Dichtung mit einer Entlüftungsnut zu versehen, die einen in beiden Richtungen wirkenden Druckausgleich ermöglicht.

### Kurze Beschreibung der Zeichnungen

Im nachfolgenden werden unter Bezugnahme auf die Zeichnungen bevorzugte Ausführungsformen der vorliegenden Erfindung beschrieben. Es zeigen:
- Figur 1: In einer Schnittdarstellung eine wälzgelagerte Spannrolle mit einer beidseitig übereinstimmenden zweistufigen Abdichtung;
- Figur 2: Eine wälzgelagerte Spannrolle mit zueinander abweichend gestalteten Abdichtungen;
- Figur 3: Ein Wälzlager für eine Spannrolle, mit zwei unterschiedlich gestalteten zweistufigen Abdichtungen;
- Figur 4: In einer vergrößerten Darstellung eine der Wälzlagerdichtung axial vorgelagerte Dichtscheibe;
- Figur 5: Vergrößert abgebildet, ein Wälzlager im Halbschnitt.

### Detaillierte Beschreibung der Zeichnungen

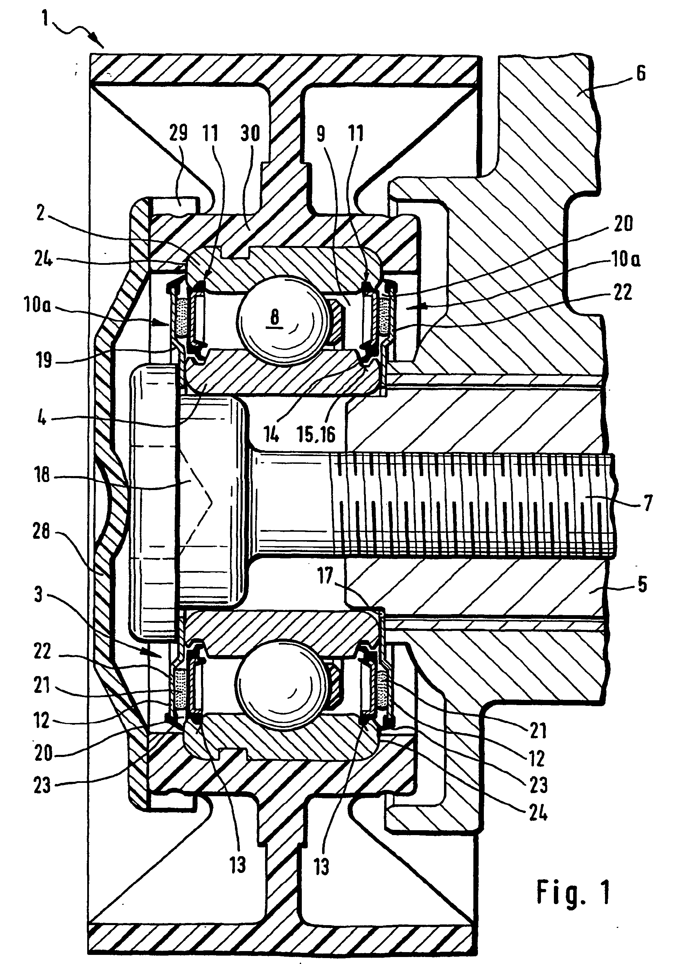

Eine wälzgelagerte Spannrolle 1 für einen Zugmitteltrieb in einer Schnittdarstellung zeigt die Figur 1. Die aus Kunststoff hergestellte Spannrolle 1 umschließt formschlüssig einen äußeren Lagerring 2 eines als Rillenlager gestalteten Wälzlagers 3. Das Wälzlager 3 ist über den inneren Lagerring 4 auf einer zylindrischen Aufnahme 5 des Gehäuses 6 zentriert. Mittels einer Schraube 7 ist das Wälzlager 3 kraftschlüssig mit dem Gehäuse 6 verbunden.

Zur Abdichtung des Wälzlagers 3 ist jeweils beidseitig der Wälzkörper 8 eine zweistufige Abdichtung 10a vorgesehen. Mit der Abdichtung 10a wird ein sich zwischen den Lagerringen 2 und 4 bildender Ringspalt 9 beidseitig abgedichtet. Die zweistufige Abdichtung 10a umfaßt eine Dichtung 11, der eine separate Dichtscheibe 12 axial vorgelagert ist. Die Dichtung 11 ist dazu über eine Ringnut 13 im äußeren Lagerring 2 lagefixiert. Über eine Dichtlippe 14 stützt sich die Dichtung 11 an dem inneren Lagerring 4 ab. Dabei liegt die Dichtlippe 14 schleifend an der Wandung 15 der Umlaufnut 16 an. Die Dichtscheibe 12 umfasst einen bevorzugt spanlos aus einem metallischen Werkstoff hergestellten Scheibenkörper 22. Über eine zentrische Befestigungsbohrung 17 ist die Dichtscheibe 12 auf einem Ansatz 18 der Schraube 7 zentriert. Radial erstreckt sich die Dichtscheibe 12 bis über die Innenkontur des äußeren Lagerrings 2. Im Bereich des sich zwischen den Lagerringen 2, 4 bildenden Ringspaltes 9 ist die Dichtscheibe 12 mit einer Kröpfung 19 versehen, die abgewandt von den Wälzkörpern 8 ausgerichtet ist. Die Kröpfung 19 bildet einen kreisringförmigen Dichtspalt 20 gleichen Abstandes über die gesamte radiale Länge, in dem als Dichtmittel ein umlaufender Fettkragen 21 eingebracht ist. Zur Abdichtung des Dichtspaltes 20 schließt die Erfindung alternativ oder zusätzlich zu dem Fettkragen 21 eine zwischen der Dichtscheibe 12 und dem Lagerring 2 vorgesehene Dichtlippe ein. Dazu ist am Außenumfang des Scheibenkörpers 22 der Dichtscheibe 12 eine umlaufende Dichtlippe 23 vorgesehen, die an der Stirnseite 24 des äußeren Lagerrings 2 abgestützt ist. Die Spannrolle 1 ist zentrisch mit einem, vorzugsweise auf Kunststoff hergestellten Deckel 28 versehen, der das gesamte Wälzlager 3 einschließlich der Schraube 7 axial abdeckt und mittels axial ausgerichteter Halteelemente 29 an einer Nabe 30 der Spannrolle 1 verschnappt.

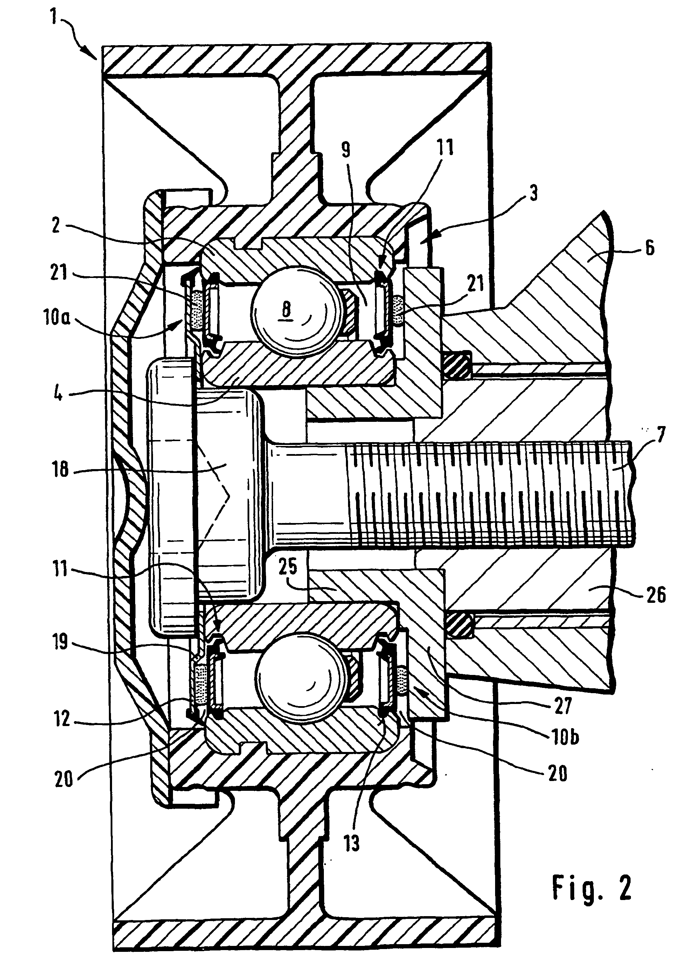

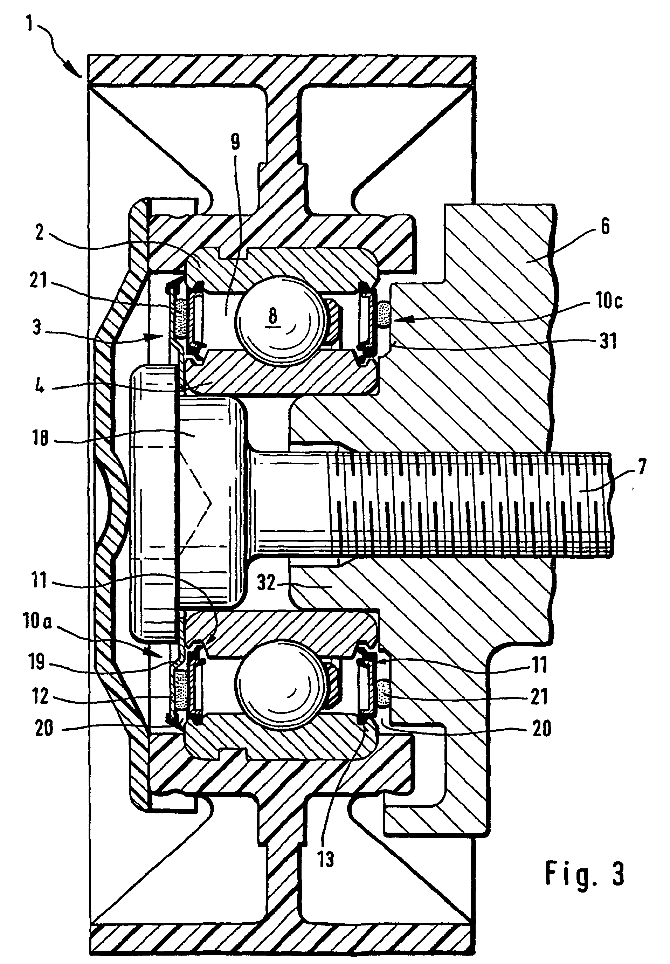

Die Figuren 2 und 3 zeigen die wälzgelagerte Spannrolle 1 gemäß Figur 1, wobei die jeweils zweistufig aufgebauten Abdichtungen des Wälzlagers 3 unterschiedlich gestaltet sind. Die mit der Figur 1 übereinstimmenden Bauteile sind mit gleichen Bezugsziffem versehen, so daß zu deren Beschreibung auf Figur 1 verwiesen werden kann.

Abweichend zu Figur 1 ist das Wälzlager 3 in Figur 2 auf einem mit einem Gehäuse 26 verbunden Trägerring 25 zentriert. Dazu ist der innere Lagerring 4 auf einem zylindrischen Abschnitt des Trägerrings 25 gehalten. Endseitig ist der Trägerring 25 mit einem umlaufenden, radial ausgerichteten Bord 27 versehen, der sich bis an die Kontur des äußeren Lagerrings 2 erstreckt. Im Bereich des Ringspaltes 9 bildet der Bord 27 den Dichtspalt 20, der axial von der Dichtung 11 und dem Bord 27 begrenzt ist. Der Dichtspalt 20 eignet sich zur Aufnahme eines Fettkragens 21 oder eines geeigneten anderen Dichtmittels, beispielsweise eines Filzrings, die gemeinsam die Abdichtung 10b bilden. Auf der vom Trägerring 25 abgewandten Seite ist das Wälzlager 3 mit einer zweistufigen Abdichtung 10a gemäß Figur.1 abgedichtet.

Eine weitere alternativ gestaltete zweistufige Abdichtung 10 c zeigt die Figur 3. Der Dichtspalt 20 wird dabei axial begrenzt von der Dichtung 11 und einer radial ausgerichteten Schulter 31, die sich an einem zylindrischen Gehäusezapfen 32 anschließt, auf dem der innere Lagerring 4 zentriert ist. Gegenseitig zur Schulter 31 ist das Wälzlager 3 mit einer Abdichtung 10 a versehen. Bevorzugt ist in ein Dichtspalt 20 beidseitig, zumindest teilweise, ein Dichtmittel eingebracht, ein Fettkragen 21 oder ein geeignetes alternatives Dichtmittel.

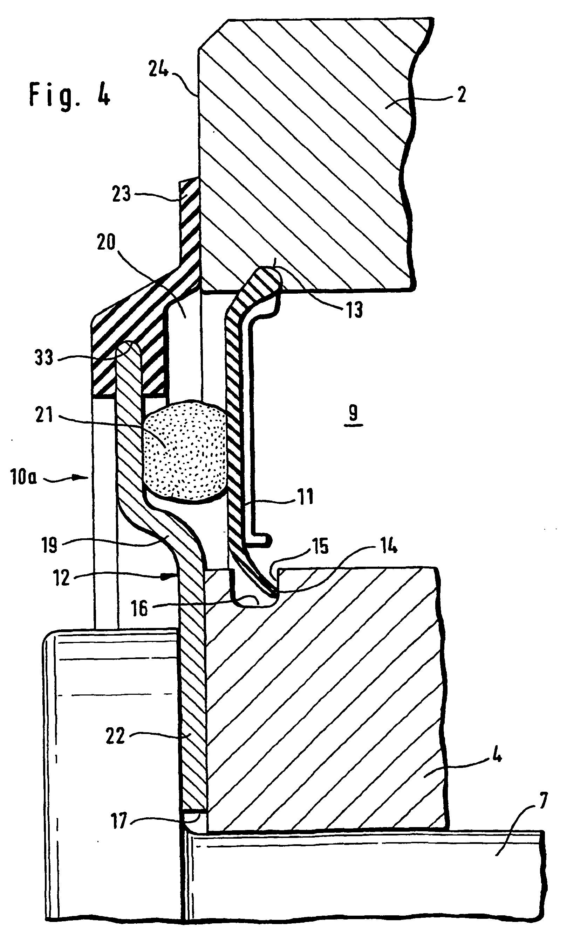

In Figur 4 ist die Dichtung 10 a vergrößert abgebildet, die insbesondere die Gestaltung des Dichtspaltes 20 verdeutlicht. Der spanlos aus Blech geformte Scheibenkörper 22 der Dichtscheibe 12 bildet im Bereich des Ringspaltes 9 zwischen den Lagerringen 2 und 4 eine nach außen gerichtete Kröpfung 19. In den axial von der Dichtung 11 und der Dichtscheibe 12 begrenzten Dichtspalt 20 ist als Dichtmittel der Fettkragen 21 eingebracht. Der Außenumfang der Scheibenkörper 22 ist von der Dichtlippe 23 umschlossen. Dazu ist die Dichtlippe 23 formschlüssig mit dem Scheibenkörper 22 verbunden, in dem der Scheibenkörper 22 in eine Nut 33 der Dichtlippe 23 eingreift. Alternativ zu einer formschlüssigen Anbindung der Dichtlippe 23 kann diese auch beispielsweise an dem Scheibenkörper 23 vulkanisiert oder geklebt werden. Aufgrund des dünnwandigen Scheibenkörpers 22 ist die Dichtscheibe 12 mit vorhandenen Bauteilen kombinierbar, so daß die erfindungsgemäße zweistufige Abdichtung bei Bedarf auch nachgerüstet werden kann oder beliebig ohne Verwendung spezieller Teile eingebaut werden kann.

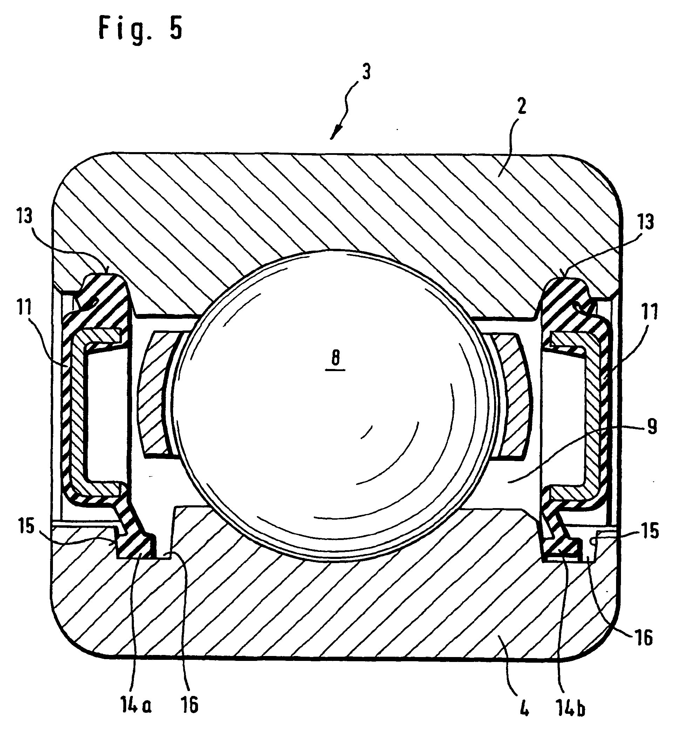

In Figur 5 ist das Wälzlager 3 als Einzelteil abgebildet. Zur Erzielung eines Druckausgleichs zwischen dem Innenraum des Wälzlagers 3 und der Atmosphäre sind die Dichtlippen 14a, 14b der Dichtung 11 jeweils an der linken Wandung 15 der Umlaufnut 16 abgestützt. Eine Dichtlippe 14a ist in der Umlaufnut 16 an der vom Wälzkörper 8 abgewandten Wandung 15 der Umlaufnut 16 abgestützt. Die Dichtlippe 14 b der gegenseitig angeordneten Dichtung 11 stützt sich an der wälzkörperseitigen Wandung 15 der Umlaufnut 16 ab. Aufgrund dieser Dichtlippenanordnung ergibt sich unabhängig von einem Differenzdruck stets ein selbsttätiger Druckausgleich. Bei einem Überdruck im Inneren des Wälzlagers 3 gegenüber der Umgebung erfolgt ein Druckausgleich, in dem die Dichtlippe 14 b kurzzeitig von der Wandung 15 abhebt. Bei einem umgekehrten Druckgefälle, einem Vakuum im Inneren des Wälzlagers 3 hebt die Dichtlippe 14 a von der Wandung 15 ab.

Alternativ zu den in Figur 5 abgebildeten Dichtlippen schließt die Erfindung ebenfalls eine Dichtung 11 ein, bei der die Dichtlippen 14 a, 14 b symmetrisch, d.h. an übereinstimmenden Wandungen, beispielsweise an der jeweils nach außen gerichteten Wandung der Umlaufnut 16 anliegen. Der Druckausgleich erfolgt dabei mittels zumindest einer Entlüftungsnut an einer Dichtlippe im Bereich der Dichtlippenabstützung an der Wandung 15.

### Bezugszahlenliste

- 1: Spannrolle
- 2: Lagerring
- 3: Wälzlager
- 4: Lagerring
- 5: Aufnahme
- 6: Gehäuse
- 7: Schraube
- 8: Wälzkörper
- 9: Ringspalt
- 10 a: Abdichtung
- 10 b: Abdichtung
- 10 c: Abdichtung
- 11: Dichtung
- 12: Dichtscheibe
- 13: Ringnut
- 14: Dichtlippe
- 14 a: Dichtlippe
- 14 b: Dichtlippe
- 15: Wandung
- 16: Umlaufnut
- 17: Befestigungsbohrung
- 18: Ansatz
- 19: Kröpfung
- 20: Dichtspalt
- 21: Fettkragen
- 22: Scheibenkörper
- 23: Dichtlippe
- 24: Stirnseite
- 25: Trägerring
- 26: Gehäuse
- 27: Bord
- 28: Deckel
- 29: Halteelement
- 30: Nabe
- 31: Schulter
- 32: Gehäusezapfen
- 33: Nut

## Patentansprüche

1. Abdichtung, die beidseitig eines Wälzlagers (3) einen Ringspalt (9) zwischen einem äußeren Lagerring (2) und einem inneren Lagerring (4) axial beabstandet zu den Wälzkörpern (8) abdichtet, die eine an dem äußeren Lagerring (2) lagefixierte Dichtung (11) umfasst, die mit zumindest einer Dichtlippe (14, 14 a, 14 b) an dem inneren. Lagerring (4) abgestützt ist, **dadurch gekennzeichnet, dass** zur Bildung einer zweistufigen Abdichtung (10 a, 10 b, 10 c) die Dichtung (11) mit einem axial vorgelagerten, separaten Bauteil, das drekstam mit dem inneren Lageming (4) verbunden ist, einen radial ausgerichteten, kreisringförmigen Dichtspalt (20) bildet, in dem zumindest teilweise ein Dichtmittel eingebracht ist.

2. Abdichtung nach Anspruch 1, bei dem das Wälzlager (8) in einer Riemenscheibe oder Spannrolle eines Zugmitteltriebs eingesetzt ist.

3. Abdichtung nach Anspruch 1, wobei zumindest einer Dichtung (11) eine separate Dichtscheibe (12) unter Einhaltung des Dichtspaltes (20) axial vorangestellt ist und die Dichtscheibe (12) drehstarr mit dem inneren Lagerring (4) verbunden ist.

4. Abdichtung nach Anspruch 1, wobei das Wälzlager (3) einem Trägerring (25) zugeordnet ist, dessen endseitiger Bord (27) den Ringspalt (9) radial überdeckt und gemeinsam mit der Dichtung (11) den Dichtspalt (20) axial begrenzt.

5. Abdichtung nach Anspruch 1, wobei das Wälzlager (3) auf einem Gehäusezapfen bzw. Zapfen (32) zentriert ist, an dem sich axial beabstandet zu der Dichtung (11) eine radial ausgerichtete Schulter (31) anschließt.

6. Abdichtung nach Anspruch 3, wobei die aus einem metallischen Werkstoff spanlos hergestellte Dichtscheibe (12) einen Scheibenkörper (22) mit einer zentrischen Befestigungsbohrung (17) umfaßt, der sich radial über den Ringspalt (9) erstreckt, der sich zwischen den Lagerringen (2 und 3) einstellt.

7. Abdichtung nach Anspruch 6, wobei zur Erzielung des Dichtspaltes (20) zwischen den Dichtung (11) und der Dichtscheibe (12), der Scheibenkörper (22) im Bereich des sich zwischen den Lagerringen (2,4) einstellenden Ringspaltes (9) eine Kröpfung (19) aufweist.

8. Abdichtung nach Anspruch 6, wobei die Dichtscheibe (12) außenseitig von einer elastischen Dichtlippe (23) umschlossen ist, die in der Einbaulage an einer Stirnseite (24) des äußeren Lagerrings (2) abgestützt ist.

9. Abdichtung nach Anspruch 1, wobei in den kreisringförmig gestalteten Dichtspalt (20) umlaufend ein Fettkragen (21) eingebracht ist.

10. Abdichtung nach Anspruch 1, wobei als Dichtmittel in den kreisringförmig ausgebildeten Dichtspalt (20) ein Filzring eingesetzt ist.

11. Abdichtung nach Anspruch 1, wobei die Dichtung (11) in eine zu der Stirnseite (24) des äußeren Lagerrings (2) axial versetzt angeordnete Ringnut (13) lagefixiert angeordnet ist und die über eine Dichtlippe (14, 14 a, 14 b) an dem inneren Lagerring (4) abgestützt ist, und eine Armierung der Dichtung (11) sich bis nahe an eine Mantelfläche des inneren Lagerrings (4) erstreckt.

12. Abdichtung nach Anspruch 11, wobei die Dichtlippe (14, 14 a, 14 b) in eine axial zu der Stirnseite des inneren Lagerrings (4) versetzt angeordnete Umlaufnut (16) eingreift und an einer Wandung (15) der Umlaufnut (16) schleifend abgestützt ist.

13. Abdichtung nach Anspruch 12, wobei beide Dichtlippen (14 a, 14b) der Dichtung (11) entweder an der rechten oder der linken Wandung (15) der zugehörigen Umlaufnut (16) abgestützt sind.

14. Abdichtung nach Anspruch 1, wobei zumindest eine Dichtlippe (14, 14 a, 14 b) im Bereich einer Wandungsanlage mit einer radial ausgerichteten Entlüftungsnut versehen ist.

## Claims

1. Sealing device which seals, on both sides of a roller bearing (3), an annular gap (9) between an outer bearing ring (2) and an inner bearing ring (4) in a manner which is axially spaced apart from the rolling bodies (8), and which sealing device comprises a seal (11) which is fixed in position on the outer bearing ring (2) and is supported on the inner bearing ring (4) by way of at least one sealing lip (14, 14a, 14b), **characterized in that**, in order to form a two-stage sealing device (10a, 10b, 10c), the seal (11) forms a radially oriented, circularly annular sealing gap (20) together with a separate component which is mounted radially ahead of it and is connected rigidly in terms of rotation to the inner bearing ring (4), a sealing means being introduced at least partially into the said sealing gap (20).

2. Sealing device according to Claim 1, in which the roller bearing (8) is used in a pulley wheel or tensioning roller of a flexible drive.

3. Sealing device according to Claim 1, a separate sealing washer (12) being placed axially in front of at least one seal (11) while maintaining the sealing gap (20), and the sealing washer (12) being connected rigidly in terms of rotation to the inner bearing ring (4).

4. Sealing device according to Claim 1, the roller bearing (3) being assigned to a carrier ring (25), the end-side rim (27) of which covers the annular gap (9) radially and delimits the sealing gap (20) axially together with the seal (11).

5. Sealing device according to Claim 1, the roller bearing (3) being centred on a housing journal or pin (32) which is adjoined by a radially oriented shoulder (31) in a manner which is spaced apart axially with respect to the seal (11).

6. Sealing device according to Claim 3, the sealing washer (12) which is produced from a metallic material without cutting comprising a washer body (22) which has a central fastening hole (17) and extends radially over the annular gap (9) which is produced between the bearing rings (2 and 4).

7. Sealing device according to Claim 6, the washer body (22) having a right-angled bend (19) in the region of the annular gap (9) which is produced between the bearing rings (2, 4), in order to bring about the sealing gap (20) between the seal (11) and the sealing washer (12).

8. Sealing device according to Claim 6, the sealing washer (12) being surrounded on the outside by an elastic sealing lip (23) which is supported on an end side (24) of the outer bearing ring (2) in the installation position.

9. Sealing device according to Claim 1, a grease collar (21) being made circumferentially in the sealing gap (20) of circularly annular configuration.

10. Sealing device according to Claim 1, a felt ring being inserted as a sealing means into the sealing gap (20) of circularly annular configuration.

11. Sealing device according to Claim 1, the seal (11) being arranged fixedly in position in an annular groove (13) which is arranged offset axially with respect to the end side (24) of the outer bearing ring (2), and being supported on the inner bearing (4) via a sealing lip (14, 14a, 14b), and a reinforcement of the seal (11) extending to near a circumferential surface of the inner bearing ring (4).

12. Sealing device according to Claim 11, the sealing lip (14, 14a, 14b) engaging in a circumferential groove (16) which is arranged offset axially with respect to the end side of the inner bearing ring (4), and being supported in a dragging manner on a wall (15) of the circumferential groove (16).

13. Sealing device according to Claim 12, both sealing lips (14a, 14b) of the seal (11) being supported either on the right-hand or the left-hand wall (15) of the associated circumferential groove (16).

14. Sealing device according to Claim 1, at least one sealing lip (14, 14a, 14b) being provided with a radially oriented ventilation groove in the region of an abutment against the wall.

## Revendications

1. Joint d'étanchéité, qui obture de part et d'autre d'un palier à roulement (3), à distance axiale des corps de roulement (8), une fente annulaire (9) entre une bague de palier extérieure (2) et une bague de palier intérieure (4), qui comprend un joint (11) fixé sur la bague de palier extérieure (2), qui s'appuie par au moins une lèvre d'étanchéité (14, 14a, 14b) sur la bague de palier intérieure (4), **caractérisé en ce que**, pour former un joint d'étanchéité à deux étages (10a, 10b, 10c), le joint (11) forme avec une pièce séparée, placée en position axialement avancée, qui est calée en rotation sur la bague de palier intérieure (4), une fente d'étanchéité annulaire (20), orientée radialement, dans laquelle un moyen d'étanchéité est installé au moins partiellement.

2. Joint d'étanchéité selon la revendication 1, dans lequel le palier à roulement (8) est monté dans une poulie à courroie ou un rouleau tendeur d'un mécanisme d'entraînement par traction.

3. Joint d'étanchéité selon la revendication 1, dans lequel une rondelle d'étanchéité séparée (12) est placée axialement devant au moins un joint (11) en respectant la fente d'étanchéité (20) et la rondelle d'étanchéité (12) est calée en rotation sur la bague de palier intérieure (4).

4. Joint d'étanchéité selon la revendication 1, dans lequel le palier à roulement (3) est associé à une bague de support (25), dont le bord côté extrémité (27) recouvre radialement la fente annulaire (9) et délimite axialement la fente d'étanchéité (20) conjointement avec le joint (11).

5. Joint d'étanchéité selon la revendication 1, dans lequel le palier à roulement (3) est centré sur un tourillon de corps, respectivement un tourillon (32), auquel un épaulement orienté radialement (31) se raccorde à distance axiale par rapport au joint (11).

6. Joint d'étanchéité selon la revendication 3, dans lequel la rondelle d'étanchéité (12), fabriquée sans enlèvement de copeaux en un matériau métallique, comprend un corps de rondelle (22) avec un alésage de fixation central (17), corps qui s'étend radialement au-delà de la fente annulaire (9), qui s'établit entre les bagues de palier (2 et 4).

7. Joint d'étanchéité selon la revendication 6, dans lequel, pour créer la fente d'étanchéité (20) entre le joint (11) et la rondelle d'étanchéité (12), le corps de rondelle (22) présente un coude (19) dans la région de la fente annulaire (9) s'établissant entre les bagues de palier (2, 4).

8. Joint d'étanchéité selon la revendication 6, dans lequel la rondelle d'étanchéité (12) est entourée, côté extérieur, par une lèvre d'étanchéité élastique (23) qui, en position montée, s'appuie sur une face frontale (24) de la bague de palier extérieure (2).

9. Joint d'étanchéité selon la revendication 1, dans lequel un col de graisse (21) est placé de façon continue dans la fente d'étanchéité de forme annulaire (20).

10. Joint d'étanchéité selon la revendication 1, dans lequel on insère un anneau de feutre comme moyen d'étanchéité dans la fente d'étanchéité de forme annulaire (20).

11. Joint d'étanchéité selon la revendication 1, dans lequel le joint (11) est fixé dans une rainure annulaire (13) disposée avec un décalage axial par rapport à la face frontale (24) de la bague de palier extérieure (2) et s'appuie par une lèvre d'étanchéité (14, 14a, 14b) sur la bague de palier intérieure (4), et un renforcement du joint (11) s'étend jusqu'à proximité d'une surface latérale de la bague de palier intérieure (4).

12. Joint d'étanchéité selon la revendication 11, dans lequel la lèvre d'étanchéité (14, 14a, 14b) s'engage dans une rainure périphérique (16) disposée avec un décalage axial par rapport à la face frontale de la bague de palier intérieure (4) et s'appuie en frottant sur une paroi (15) de la rainure périphérique (16).

13. Joint d'étanchéité selon la revendication 12, dans lequel les deux lèvres d'étanchéité (14a, 14b) du joint (11) s'appuient soit sur la paroi droite soit sur la paroi gauche (15) de la rainure périphérique (16) correspondante.

14. Joint d'étanchéité selon la revendication 1, dans lequel au moins une lèvre d'étanchéité (14, 14a, 14b) est pourvue d'une rainure d'échappement d'air orientée radialement dans la région d'un appui sur la paroi.
